# EUROPEAN PATENT APPLICATION

(11) **EP 4 501 097 A1**
(43) Date of publication of application: **05.02.2025**
(21) Application number: 24184220.2
(22) Date of filing: 25.06.2024
(51) Int. Cl.: A01D 41/12

(54) **A CHAFF SPREADER FOR A COMBINE HARVESTER**

(30) Priority: 04.08.2023 GB 202312003
(71) Applicant: Agco do Brasil Solucoes Agricolas LTDA, Sao Paulo, 14030-680 (BR)
(72) Inventor: Flores Thiesen, Gustavo, 14030-680 Ribeirao Preto (BR); Bonetti, Lauro, 14030-680 Ribeirao Preto (BR); Carboni Tolotti, Fabrício, 14030-680 Ribeirao Preto (BR)
(74) Representative: AGCO Intellectual Property Department

(57) **Abstract**

A chaff spreader for a combine harvester has second fan modules are coupled by a linkage, such that an angle adjustment of one fan module entrains an opposite direction angle adjustment of the other fan module. A single actuator adjusts an angle at which chaff is ejected from the first and second fan modules. The linkage enables only one to be positively driven to different angular settings, and the other is passively driven in an opposite angular direction, to maintain symmetry between the two sides of the combine harvester. This simplifies the overall design of the chaff spreader.

## Description

### FIELD

Embodiments of the present disclosure relate generally to combine harvesters, and in particular to a chaff spreader used within a combine harvester.

### BACKGROUND

A combine harvester typically includes a threshing system for detaching grains of cereal from material other than grain, such as cobs, stems and seed pods, a separating apparatus downstream of the threshing system, and a grain cleaning apparatus (known as the cleaning shoe) for receiving grain from the separating apparatus. A stratification pan aims to stratify the material into a layered structure of grain at the bottom and light chaff and other material other than grain (MOG) at the top. The grain is collected in a grain bin, and from the grain bin the grain can be unloaded, for example to a trailer pulled by a tractor which runs alongside the combine harvester.

It is well known to install chaff spreaders for collecting and distributing MOG (i.e., chaff) ejected from the rear of the cleaning shoe. A chaff spreader for example comprises a pair of fan modules which eject the chaff at a tangent to a fan rotation axis.

It is also well known to install a straw chopper behind the threshing and separating apparatus for cutting straw, and to use a straw spreader to distribute the cut straw over the field. The straw spreader comprises rotary spinners (impellers) which drive the material into an output channel with a desired outlet direction. For example, a typical straw spreader has a pair of spinners, to actively accelerate the chopped straw and spread it at the back of the combine.

It is also known to enable the chaff from the chaff spreader to be fed into the straw chopper and/or straw spreader. For example, in a first mode, the chaff may be delivered to the straw chopper so that the chaff is spread together with the chopped straw, across the full cutting width. The straw spreading system provides a better distribution over the harvested field than a typical chaff spreader. In a second mode, a straw swath is formed, and the chaff spreader can be slowed down to mix the chaff with the straw swath to maximize the quantity and quality of straw. In a third mode, the chaff is spread before entering the straw chopper or spreader, by directing the chaff to the sides using deflectors.

It is thus known to have an adjustable angle of the fan modules to enable different modes of operation such as discussed above. The angles of the two fan modules are controlled oppositely, to maintain a symmetrical distribution of chaff to the opposite sides of the combine harvester (when in the third mode as described above). Each fan module has an adjustment actuator for adjusting the chaff ejection angle.

It would be desirable to simplify the design of the chaff spreader, while maintaining the same functionality.

### BRIEF SUMMARY

The invention is defined by the claims.

According to examples in accordance with the invention, there is provided a chaff spreader for a combine harvester, comprising:
a first fan module for receiving chaff from a grain cleaning system of the combine harvester, and distributing the chaff to a first direction;
a second fan module for receiving chaff from the grain cleaning system of the combine harvester, and distributing the chaff to a second, opposite, direction;
an actuator for adjusting an angle at which chaff is ejected from the first and second fan modules; and
a linkage coupling the first and second fan modules, such that an angle adjustment of one one fan module entrains an opposite direction angle adjustment of the other fan module.

This chaff spreader has two fan modules, but only one actuator is needed to drive the two modules to different chaff spreading angles. A linkage between the two fan modules enables only one to be positively driven to different angular settings, and the other is passively driven in an opposite angular direction, to maintain symmetry between the two sides of the combine harvester. This simplifies the overall design of the chaff spreader.

Each fan module for example comprises an outer housing have a chaff exit port, and an internal paddle arrangement for delivering chaff to the chaff exit port. The orientation of the chaff exit port then determines the angular position of the chaff leaving the chaff spreader.

Each outer housing is for example rotatable to adjust the angle at which chaff is ejected, and the linkage couples the outer housings together. Simple rotational adjustment of the outer housing enables the control of the chaff spreading angle.

The linkage is for example connected between radially outer portions of the first and second outer housings. When one outer housing rotates in one direction, to maintain the same length of the linkage, the other outer housing is driven to rotate in the opposite direction. The linkage is preferably designed such that the angular rotation angle is close to equal and opposite between the two housings, for an intended range of angular adjustment. The range of angular adjustment is for example an 80 degree range.

The actuator is for example configured to rotate the one fan module outer housing, and the linkage is configured to rotate the other fan module outer housing in an opposite direction.

The actuator for example comprises a hydraulic piston or an electric actuator. It for example couples to one fan module outer housing to convert linear piston motion to rotation of the housing.

The chaff spreader for example comprises a frame, wherein each fan module is mounted to the frame with a fan module rotation axis fixed relative to the frame, and wherein the actuator is coupled between the frame and one fan module, and the linkage is isolated from the frame. The linkage is thus separate to the frame and simply couples the two fan modules together.

The invention also provides a combine harvester comprising:
a crop cutting head;
a threshing and separating system;
a grain cleaning system for receiving the cut and threshed crop material; and
the chaff spreader as defined above downstream of the grain cleaning system.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention / disclosure will now be described, by way of example only, with reference to the accompanying drawings, in which:
Figure 1 shows a combine harvester which may be adapted in accordance with the invention;
Figure 2 shows one example of threshing system and grain cleaning apparatus in more detail;
Figure 3 shows an example of a chaff spreader in bottom view;
Figure 4 shows the chaff spreader of Figure 3 in perspective view;
Figure 5 shows the chaff spreader of Figure 3 in perspective exploded view from above;
Figure 6 shows the chaff spreader of Figure 3 in perspective exploded view from below;
Figure 7 shows the rotational coupling between the fan modules; and
Figure 8 shows three possible operating modes of a combine harvester MOG treatment system with different output directions from the chaff spreader.

### DETAILED DESCRIPTION

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

This disclosure provides a chaff spreader for a combine harvester in which first and second fan modules are coupled by a linkage, such that an angle adjustment of one fan module entrains an opposite direction angle adjustment of the other fan module. A single actuator adjusts an angle at which chaff is ejected from the first and second fan modules. The linkage enables only one to be positively driven to different angular settings, and the other is passively driven in an opposite angular direction, to maintain symmetry between the two sides of the combine harvester. This simplifies the overall design of the chaff spreader.

This disclosure relates to the design of a chaff spreader. However, a general outline of a combine harvester will first be provided.

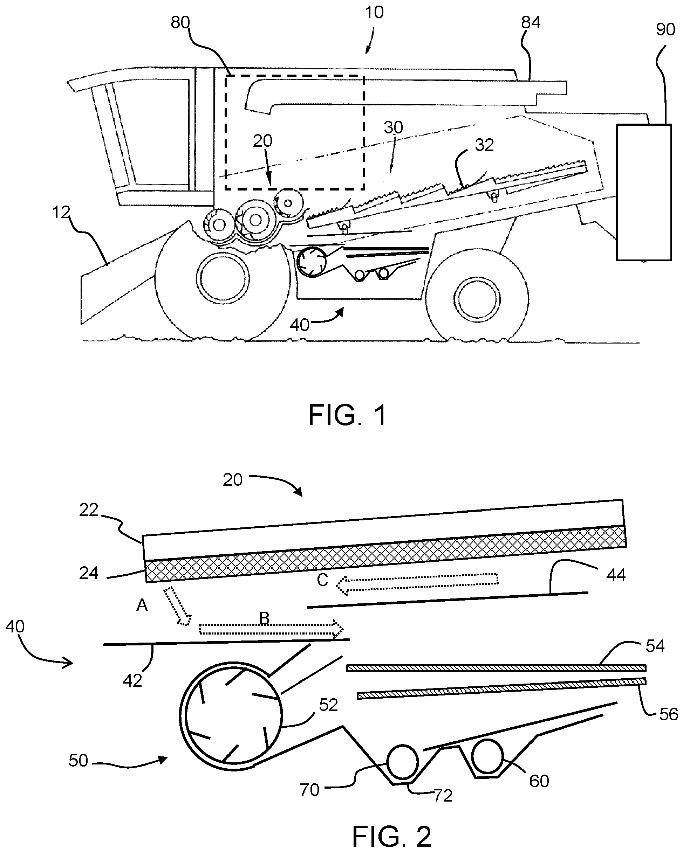

Figure 1 shows a first example of a known combine harvester 10 to which the invention may be applied. The combine harvester includes a threshing system 20 for detaching grains of cereal from the ears of cereal, and a separating apparatus 30 which is connected downstream of the threshing system 20. The threshing system comprises one or more threshing units, in particular rotors, and associated concaves. In the example shown, the separating apparatus 30 includes a plurality of parallel, longitudinally-aligned, straw walkers 32, and this is suitable for the case of a so-called straw-walker combine. The grains after separation by the separating device 30 pass to a grain cleaning apparatus 40.

The grain cleaned by the grain cleaning apparatus is delivered to a grain bin 80 by a filling auger 70. Grain from the grain bin is removed from the combine harvester by an unloading tube 84.

The combine harvester has a front elevator housing 12 at the front of the machine for attachment of a crop cutting head (known as the header, not shown). The header when attached serves to cut and collect the crop material as it progresses across the field, the collected crop stream being conveyed up through the elevator housing 12 into the threshing system 20.

In the example shown, the threshing system 20 is a tangential-flow 'conventional' threshing system, i.e., formed by rotating elements with an axis of rotation in the side-to-side direction of the combine harvester and for generating a tangential flow. For example, the 'conventional' threshing system includes a rotating, tangential-flow, threshing cylinder and a concave-shaped grate. The threshing cylinder includes rasp bars (not shown) which act upon the crop stream to thresh the grain or seeds from the remaining material, the majority of the threshed grain passing through the underlying grate and onto a stratification pan (also sometimes known as the grain pan).

There are also axial threshing systems, i.e., formed by rotating elements with an axis of rotation in the longitudinal direction (direction of travel). For example, the threshing section may have axially-aligned rasp bars spaced around the front section whilst the separating section has separating elements or fingers arranged in a pattern, e.g., a spiral pattern, extending from the rasp bars to the rear of the rotor.

The MOG (material other than grain), in particular chaff, exits the combine harvester at the back. This invention relates to a chaff spreader 90 provided at the back of the combine harvester. As discussed above the chaff spreader may be used for spreading the chaff in a uniform layer over the harvested field, or it may be used to mix the chaff with straw, either for distribution or for mixing with a straw swath.

As mentioned above, instead of tangential flow threshing (and separating), axial threshing (and separating) is also known, and the invention may be applied to any type of combine. For completeness, Figure 2 shows an axial threshing and separating system 20, together with a more detailed view of the cleaning apparatus 40.

The threshing system 20 in this case comprises an axial rotor 22 beneath which is mounted the concave 24. The concave may have different sections along its length, and the first section to receive the crop material (to the left in Figure 2) may have a releasable concave, or else the whole length of the concave may be releasable. The separating function for this type of combine involves conveying the crop stream rearwardly in a ribbon passing along a spiral path.

No matter what type of threshing is performed, the initial threshing creates a flow of grain to a stratification pan 42. The separating function further downstream of the threshing system serves to separate further grain from the crop stream and this separated grain passes through a grate-like structure onto an underlying return pan 44. The residue crop material, predominantly made up of straw, exits the machine at the rear. Although not shown in Figure 1, a straw spreader and/or chopper may be provided to process the straw material as required.

The threshing apparatus 20 does not remove all material other than grain, "MOG", from the grain so that the crop stream collected by the stratification pan 42 and return pan 44 typically includes a proportion of straw, chaff, tailings and other unwanted material such as weed seeds, bugs, and tree twigs. The remainder of the grain cleaning apparatus 40 is in the form of a grain cleaning unit 50. The grain cleaning unit 50 removes this unwanted material thus leaving a clean sample of grain to be delivered to the bin.

The grain cleaning unit 50 comprises a fan unit 52 and sieves 54 and 56. The upper sieve 54 is known as the chaffer.

The stratification pan 42 and return pan 44 are driven in an oscillating manner to convey the grain and MOG accordingly. Although the drive and mounting mechanisms for the stratification pan 42 and return pan 44 are not shown, it should be appreciated that this aspect is well known in the art of combine harvesters and is not critical to disclosure of the invention. Furthermore, it should be appreciated that the two pans 42, 44 may take a ridged construction as is known in the art.

The general flow of material is as follows. The grain passing through the concave 24 falls onto the front of stratification pan 42 as indicated by arrow A in Figure 2. This material is conveyed rearwardly (in the direction of arrow B in Figure 2) by the oscillating motion of the stratification pan 42 and the ridged construction thereof. Material passing through the concave further back falls onto the return pan 44 and is conveyed forwardly by the oscillating motion and ridged construction thereof as shown by arrow C.

It is noted that "forwardly" and "rearwardly" refer to direction relative to the normal forward direction of travel of the combine harvester.

When the material reaches a front edge of the return pan 44 it falls onto the stratification pan 42 and is conveyed as indicated by arrow B.

The combined crop streams thus progress rearwardly towards a rear edge of the stratification pan 42. Whilst conveyed across the stratification pan 42, the crop stream, including grain and MOG, undergoes stratification wherein the more dense grain sinks to the bottom layers adjacent stratification pan 42 and the lighter and/or larger MOG rises to the top layers.

Upon reaching the rear edge of the stratification pan 42, the crop stream falls onto the chaffer 54 which is also driven in a fore-and-aft oscillating motion. The chaffer 54 is of a known construction and includes a series of transverse ribs or louvers which create open channels or gaps therebetween. The chaffer ribs are angled upwardly and rearwardly so as to encourage MOG rearwardly whilst allowing the grain to pass through the chaffer onto an underlying second sieve 56.

The chaffer 54 is coarser (with larger holes) than second sieve 56. Grain passing through chaffer 54 is incident on the lower sieve 56 which is also driven in an oscillating manner and serves to remove tailings from the stream of grain before being conveyed to the on-board bin by the filling auger 70 which resides in a transverse trough 72 at the bottom of the grain cleaning unit 50. Tailings blocked by sieve 56 are conveyed rearwardly by the oscillating motion thereof to a rear edge from where the tailings are directed to the returns auger 60 for reprocessing in a known manner. The grain is for example smaller and denser and generally more aerodynamic than MOG, therefore, less susceptible to being conveyed rearward by the chaffer/sieve and/or blown out of the rear of the machine by the air stream of the cleaning fan, passing upward and rearward, through the chaffer.

All material which has not been collected by the filling auger 70 or returns auger exits the back of the combine harvester and passes to the chaff spreader 90. Thus, the chaff spreader is downstream of the threshing and separating apparatus and also receives the rejected material from the cleaning shoe.

This disclosure relates to the design of the chaff spreader 90.

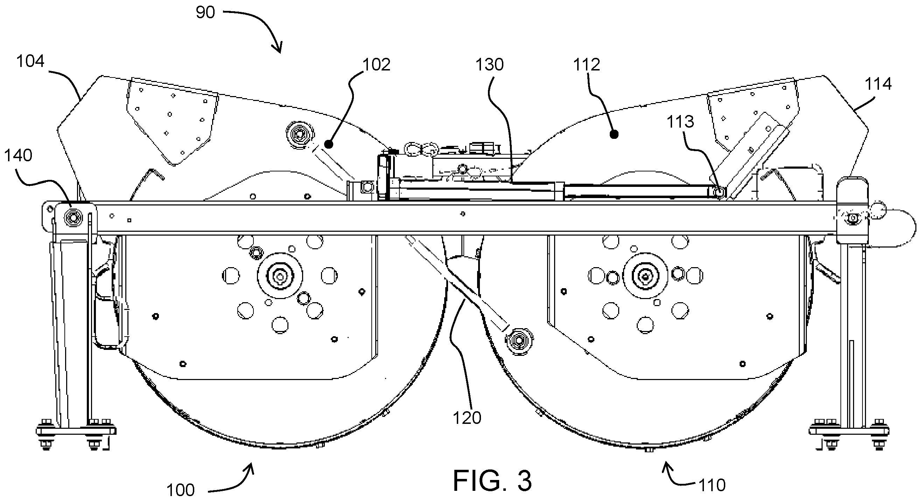

Figure 3 shows an example of a chaff spreader 90 in bottom view.

The chaff spreader 90 has a first fan module 100 for receiving chaff from a threshing and separating apparatus (and from the cleaning apparatus) of the combine harvester, and distributing the chaff to a first direction (e.g., a first side of the combine harvester). A second fan module 110 is also for receiving chaff from the threshing and separating apparatus, and distributing the chaff to an opposite second direction (e.g., a second side of the combine harvester).

The first fan module 100 comprises an outer housing 102 with a chaff exit port 104, and an internal paddle arrangement for delivering chaff to the chaff exit port. The orientation of the chaff exit port determines the angular spread of the chaff leaving the respective side of the chaff spreader. The second fan module 110 also comprises an outer housing 112 with a chaff exit port 114, and an internal paddle arrangement for delivering chaff to the chaff exit port. The angle adjustment of a fan module is achieved by rotating the outer housing relative to a fixed frame 140.

The outer housing of the fan modules are rotated in opposite directions to change the spread angle of chaff. Thus, chaff discharge angle on one side is accompanied by corresponding opposite chaff discharge angle on the other side to maintain a symmetrical discharge of chaff.

A linkage 120 couples the first and second fan modules 100, 110, such that an angle adjustment of one fan module entrains an opposite direction angle adjustment of the other fan module. In particular, the linkage 120 couples the outer housings of the two fan modules. The outer housings can rotate about the same axis as the rotation of the internal paddle arrangement.

An actuator 130 is provided for adjusting an angle at which chaff is ejected from the first and second fan modules. It adjusts the angular orientation of one of the fan modules, i.e., one of the fan module outer housings, and the linkage then entrains rotation of the other fan module, i.e., the other fan module outer housing. In the example shown, the second fan module 110 is actively rotated by the actuator (in particular its outer housing is rotated), and the first fan module is passively driven by the linkage 120.

Thus, only one actuator is needed to drive the two modules to different chaff spreading angles.

The linkage 120 is connected between radially outer portions of the first and second outer housings. The ends of the linkage 120 are coupled with rotational connections to the fan module housings. When one outer housing rotates in one direction, to maintain the same length of the linkage, the other outer housing is constrained to rotate in the opposite direction.

The linkage is preferably designed such that the angular rotation angle is close to equal and opposite between the two housings, for an intended range of angular adjustment. The range of angular adjustment is for example an 80 degree range.

The actuator 13 comprises a hydraulic piston or an electric actuator, or indeed any suitable actuator. In the example shown, the actuator couples to the second fan module outer housing 112 at coupling 113 to convert linear piston motion to rotation of the housing.

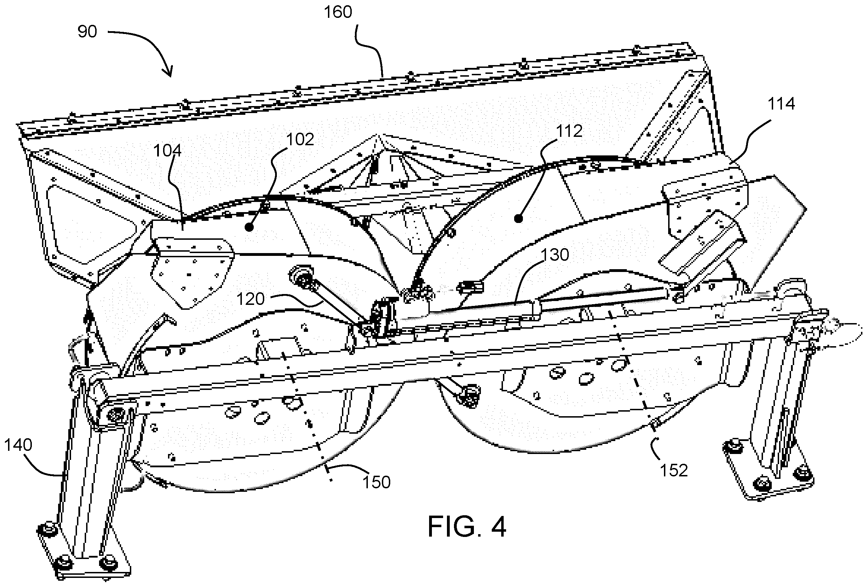

Figure 4 shows the chaff spreader of Figure 3 in perspective view. It shows the frame 140 more clearly. Each fan module is mounted to the frame 140 with a fan module rotation axis 150, 152 fixed relative to the frame. The actuator is coupled between the frame 140 and one of the fan modules (the second fan module in this example), and the linkage 120 is isolated from the frame. The linkage is thus separate to the frame and simply couples the two fan modules together. Because they are both constrained by their axis of rotation, the coupling by the linkage 120 results in a single mapping between the angular position of one fan module and the angular position of the other fan module.

Figure 4 also shows a feed funnel 160 that feeds chaff into the chaff spreader.

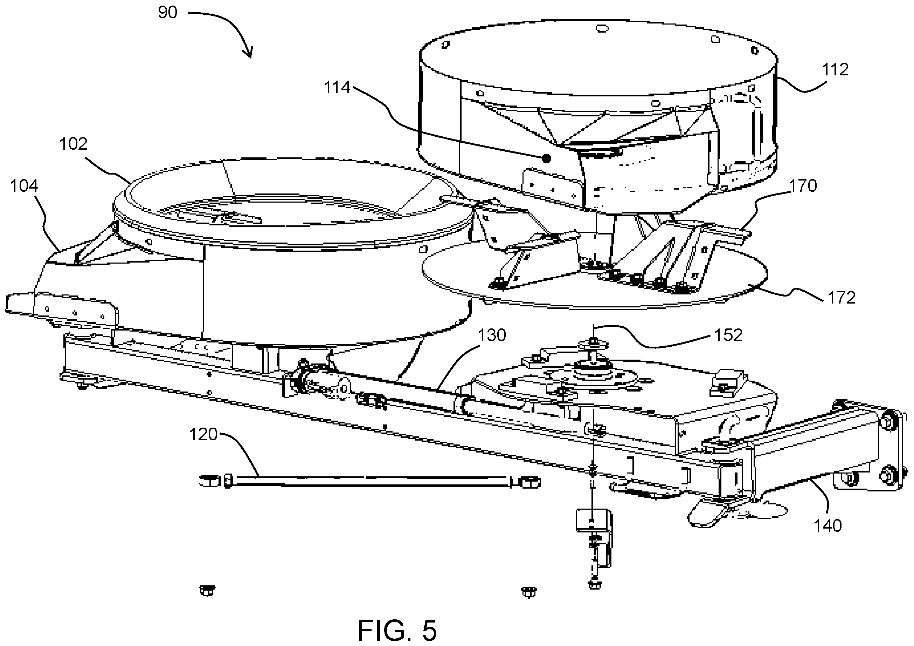

Figure 5 shows the chaff spreader of Figure 3 in perspective view from above, with one fan module shown in exploded form. The exploded view shows the fan paddles 170. They are mounted on a plate 172 that rotates about the respective axis 152, while the fan module housing is static (once its angular position has been set by the actuator).

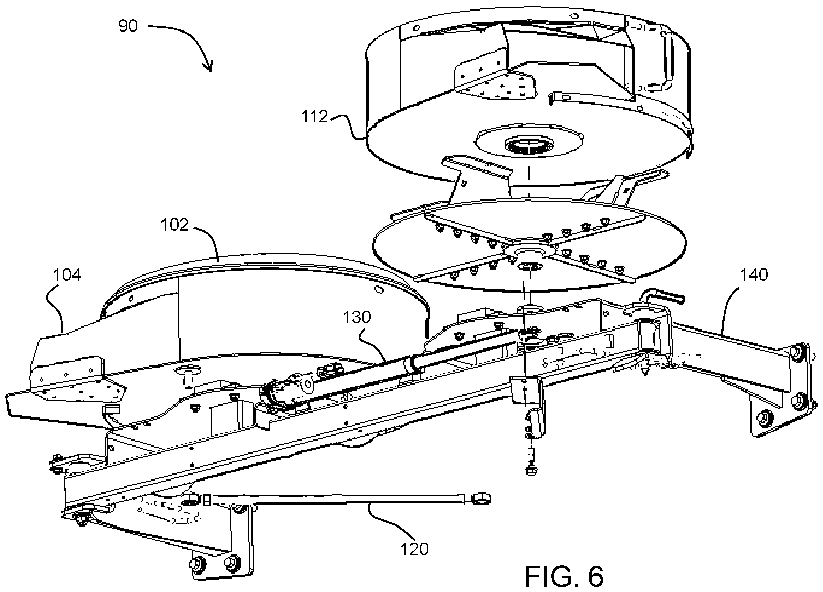

Figure 6 shows the chaff spreader of Figure 3 in perspective exploded view from below.

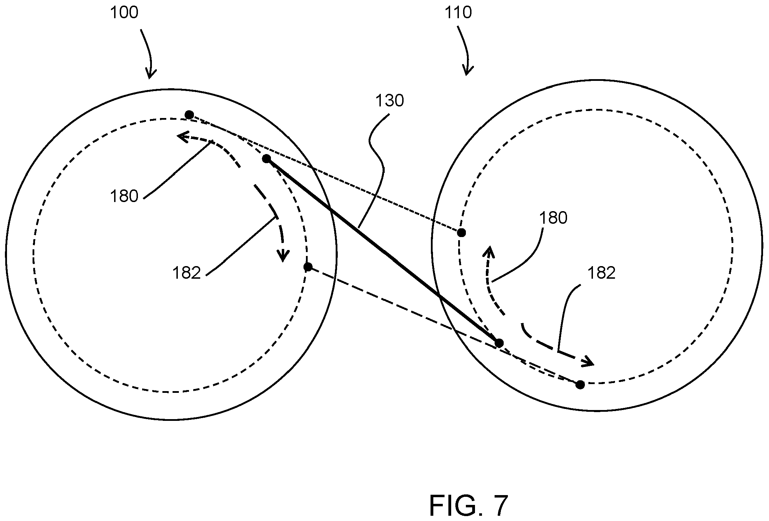

Figure 7 shows how the linkage results in opposite directions of rotation of the two fan modules. It shows a middle position of the linkage, shows arrows 180 representing movement in one direction and arrows 182 representing movement in the opposite direction.

The actuator adjustment may be between a set of defined angles such as 0, 20 degrees and 80 degrees. These angles correspond to different modes of operation.

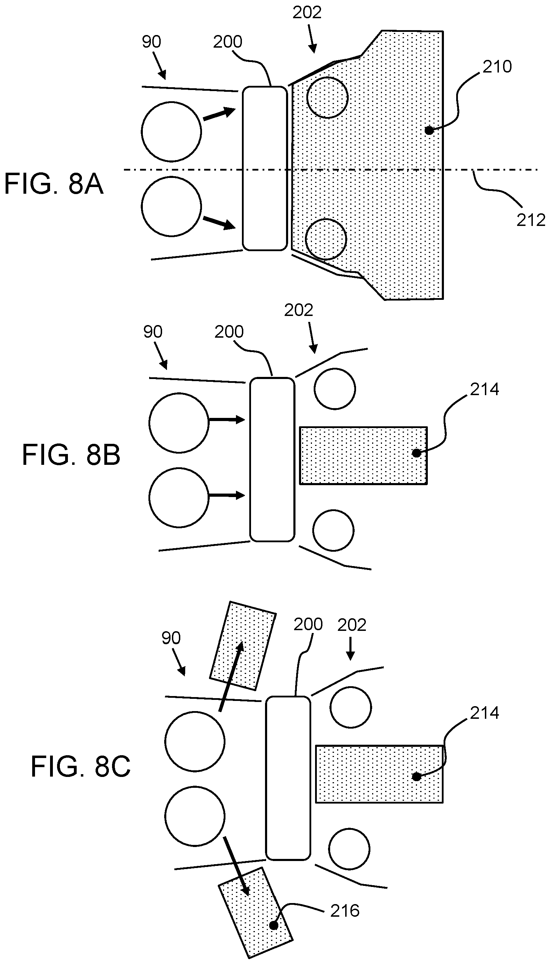

Figure 8 shows the three modes discussed above.

The first mode is shown in Figure 8A. It involves delivering the chaff to the straw chopper 200 so that the chaff is spread by the straw spreader 202 together with the chopped straw, across the full cutting width as shown by area 210. In this mode, the output direction from the two fan modules of the chaff spreader 90 (if projected onto a horizontal plane) may be at 20 degrees each side of the fore-aft direction 212 of the combine. Figure 8B shows the second mode in which the chaff is added to a central straw swath 214. In this case, the output direction may be in the fore-aft direction, i.e., with an angle of 0 degrees (and the chaff spreader can be slowed down as mentioned above). Figure 8C shows the third mode, in which the the chaff is diverted sideways so that is bypasses the straw chopper and spreader and creates a separate spread chaff area 216. In this case, the output direction may be 80 degrees to each side of the fore-aft direction.

Of course, these specific angles are simply by way of example. The invention may be used for any desired symmetrical adjustment of the angular position of two chaff spreader fan modules.

The invention may be applied to any design of combine harvester. Thus, it does not rely on any particular threshing, separating or cleaning design, and the examples above are only given to aid overall understanding.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

Any reference signs in the claims should not be construed as limiting the scope.

All references cited herein are incorporated herein in their entireties. If there is a conflict between definitions herein and in an incorporated reference, the definition herein shall control.

## Claims

1. A chaff spreader (90) for a combine harvester, comprising:
a first fan module (100) for receiving chaff from a grain cleaning system of the combine harvester, and distributing the chaff to a first direction;
a second fan module (110) for receiving chaff from the grain cleaning system of the combine harvester, and distributing the chaff to a second, opposite, direction;
an actuator (130) for adjusting an angle at which chaff is ejected from the first and second fan modules; and
a linkage (120) coupling the first and second fan modules, such that an angle adjustment of one one fan module entrains an opposite direction angle adjustment of the other fan module.

2. The chaff spreader of claim 1, wherein each fan module comprises an outer housing (102. 112) having a chaff exit port (104;114), and an internal paddle arrangement (170) for delivering chaff to the chaff exit port.

3. The chaff spreader of claim 2, wherein each outer housing is rotatable to adjust the angle at which chaff is ejected, and the linkage (120) couples the outer housings together.

4. The chaff spreader of claim 3, wherein the linkage (120) is connected between radially outer portions of the first and second outer housings.

5. The chaff spreader of claim 3 or 4, wherein the actuator (130) is configured to rotate one of the fan module outer housings, and the linkage (120) is configured to rotate the other fan module outer housing in an opposite direction.

6. The chaff spreader of claim 5, wherein the actuator (130) comprises a hydraulic piston or an electric actuator.

7. The chaff spreader of any one of claims 1 to 6 comprising a frame (140), wherein each fan module is mounted to the frame with a fan module rotation axis (150, 152) fixed relative to the frame, and wherein the actuator is coupled between the frame and the first fan module, and the linkage is isolated from the frame.

8. A combine harvester comprising:
a crop cutting head;
a threshing and separating system;
a grain cleaning system for receiving the cut and threshed crop material; and
the chaff spreader of any one of claims 1 to 7 downstream of the grain cleaning system.
